# EUROPEAN PATENT APPLICATION

(11) **EP 4 546 722 A1**
(43) Date of publication of application: **30.04.2025**
(21) Application number: 24204010.3
(22) Date of filing: 01.10.2024
(51) Int. Cl.: H04L 12/46, H04W 76/12, H04W 88/16

(54) **PROVIDING A MULTIPLE DWELLING UNIT FIXED WIRELESS ACCESS MECHANISM**

(30) Priority: 26.10.2023 IN 202341072782; 17.06.2024 US 202418744943
(71) Applicant: Juniper Networks, Inc., Sunnyvale, CA 94089-1206 (US)
(72) Inventor: PADEBETTU, Venkatesh, Sunnyvale, 94089 (US)
(74) Representative: D Young & Co LLP

(57) **Abstract**

A device may configure, in the device, a network address of an access gateway function, and may receive upstream packets from one or more routing gateways. The device may encapsulate the upstream packets with an identifier of a layer 2 tunnel, based on the network address, and to generate encapsulated upstream packets, and may provide the encapsulated upstream packets to the access gateway function via the layer 2 tunnel and based on the network address and the identifier. The device may receive encapsulated downstream packets from the access gateway function, and may decapsulate the encapsulated downstream packets to generate downstream packets. The device may provide the downstream packets to the one or more routing gateways.

## Description

### CROSS-REFERENCE TO RELATED APPLICATION

This Patent Application claims priority to India Patent Application No. 202341072782, filed on October 26, 2023, and entitled "PROVIDING A MULTIPLE DWELLING UNIT FIXED WIRELESS ACCESS MECHANISM." The disclosure of the prior Application is considered part of and is incorporated by reference into this Patent Application.

### BACKGROUND

Fixed wireless access (FWA) uses fourth generation (4G) or fifth generation (5G) radio spectrum to provide wireless broadband connectivity between two fixed points (e.g., between a network base station and an FWA device in a customer's home). FWA uses radio waves to send high-speed signals that offer data transfer to and from consumer devices (e.g., user equipment). An FWA system may include a base station connected to a core network and to a quantity of FWA devices (e.g., customer premises equipment (CPE)) spread over a wide area. The base station uses radio waves to communicate with the FWA devices, making it possible for consumers to connect to the core network and access high-speed data services.

### SUMMARY

Some implementations described herein relate to a method. The method may include configuring, in a device, a network address of an access gateway function, and receiving upstream packets from one or more routing gateways. The method may include encapsulating the upstream packets with an identifier of a layer 2 tunnel, based on the network address, and to generate encapsulated upstream packets, and providing the encapsulated upstream packets to the access gateway function via the layer 2 tunnel and based on the network address and the identifier.

Some implementations described herein relate to a device. The device may include one or more memories and one or more processors. The one or more processors may be configured to configure, in a device, a network address of a broadband network gateway, and receive upstream packets from one or more routing gateways. The one or more processors may be configured to encapsulate the upstream packets with an identifier of a layer 2 tunnel, based on the network address, and to generate encapsulated upstream packets, and provide the encapsulated upstream packets to the network device via the layer 2 tunnel and based on the network address and the identifier.

Some implementations described herein relate to a computer-readable medium that comprises (e.g., stores and/or conveys) a set of instructions. The set of instructions, when executed by one or more processors of a device, may cause the device to provision the device with a rule identifying a first network device and a second network device, and receive encapsulated upstream packets associated with one or more routing gateways and encapsulated into a general packet radio service tunneling protocol (GTP). The set of instructions, when executed by one or more processors of the device, may cause the device to decapsulate the GTP from the encapsulated upstream packets to generate upstream packets, and encapsulate the upstream packets with an identifier of a layer 2 tunnel and to generate encapsulated upstream packets. The set of instructions, when executed by one or more processors of the device, may cause the device to provide the encapsulated upstream packets to the first network device and the second network device via the layer 2 tunnel and based on the identifier.

### BRIEF DESCRIPTION OF THE DRAWINGS

Figs. 1A-1D are diagrams of an example associated with providing a multiple dwelling unit (MDU) FWA mechanism.
Fig. 2 is a diagram of an example environment in which systems and/or methods described herein may be implemented.
Figs. 3 and 4 are diagrams of example components of one or more devices of Fig. 2.
Figs. 5 and 6 are flowcharts of example processes for providing an MDU FWA mechanism.

### DETAILED DESCRIPTION

The following detailed description of example implementations refers to the accompanying drawings. The same reference numbers in different drawings may identify the same or similar elements.

An FWA device, such as an FWA residential gateway (RG), and a user plane function (UPF) of a core network need to support Ethernet packet data unit (PDU) sessions. For example, the FWA RG and the UPF need to identify a subscriber based on an address (e.g., a media access control (MAC) address), and to identify a MAC address of a fixed network (FN) RG behind the FWA RG. The FWA RG and the UPF also need to associate multiple MAC addresses with a single PDU session. However, an Ethernet PDU session fails to provide details on how a Layer 2 (L2) packet is handled after general packet radio service tunneling protocol (GTP) termination in the UPF. Current techniques expect an L2 packet originated from a subscriber to be sent from the UPF to an access gateway function (AGF) on an N6 interface. However, the N6 interface is a Layer 3 (L3) interface and fails to support forwarding of L2 broadcast packets (e.g., dynamic host configuration protocol (DHCP) discover packets, point-to-point protocol over Ethernet (PPPoE) active discovery initiation (PADI) packets, and/or the like). Thus, current techniques for managing FWA for a multiple dwelling unit (MDU) consume computing resources (e.g., processing resources, memory resources, communication resources, and/or the like), networking resources, and/or other resources associated with failing to support forwarding of L2 packets from the UPF to the AGF, failing to handle PDU sessions associated with the L2 packets, losing traffic due to failing to handle the PDU sessions, providing a poor user experience due to failing to handle the PDU sessions, and/or the like.

Some implementations described herein provide a device that provides an MDU FWA mechanism. For example, the device may configure, in the device, a network address of an access gateway function, and may receive upstream packets from one or more routing gateways. The device may encapsulate the upstream packets with an identifier of a layer 2 tunnel, based on the network address, to generate encapsulated upstream packets, and may provide the encapsulated upstream packets to the access gateway function via the layer 2 tunnel and based on the network address and the identifier. The device may receive encapsulated downstream packets from the access gateway function, and may decapsulate the encapsulated downstream packets to generate downstream packets. The device may provide the downstream packets to the one or more routing gateways.

In this way, the device provides an MDU FWA mechanism. For example, a data processing unit (DPU) or an FWA RG may be configured with an Internet protocol (IP) address of a broadband network gateway (BNG) (e.g., for converged use cases) and an AGF (e.g., for pure fifth generation (5G) use cases). The DPU or the FWA RG may utilize a virtual extensible local area network (VxLAN) tunnel with a tunnel identifier (e.g., a VxLAN identifier (VID)) per subscriber. Alternatively, the DPU or the FWA RG may utilize a soft generic routing encapsulation (SoftGRE) tunnel or a Layer 2 virtual private network (L2VPN) tunnel with a tunnel identifier per subscriber. The DPU ay act as a DHCP relay agent or a PPPoE intermediatory agent and may add a line identifier into respective control packets (e.g., for authentication). The FWA RG may establish an IP version 4 (IPv4), an IP version 6 (IPv6), or an IPv4v6 PDU session with a 5G core network using a wireless interface. Subscriber RG packets may be encapsulated into a VxLAN header by the DPU or the FWA RG before being sent to the PDU session over an FWA wireless interface destined for the BNG or the AGF. In the downstream, the BNG or the AGF may encapsulate subscriber traffic with the VxLAN encapsulation and may route the traffic back to the UPF, which may route the traffic to the subscriber over an N3 interface. The DPU or the FWA RG may decapsulate the VxLAN tunnel headers before delivering the packet to the subscriber. The BNG and the AGF may be configured to provide subscriber management over VxLAN.

Thus, the device (e.g., the DPU, the FWA RG, the UPF, the AGF, and/or the BNG) may conserve computing resources, networking resources, and/or other resources that would have otherwise been consumed by failing to support forwarding of L2 packets from the UPF to the AGF, failing to handle PDU sessions associated with the L2 packets, losing traffic due to failing to handle the PDU sessions, providing a poor user experience due to failing to handle the PDU sessions, and/or the like.

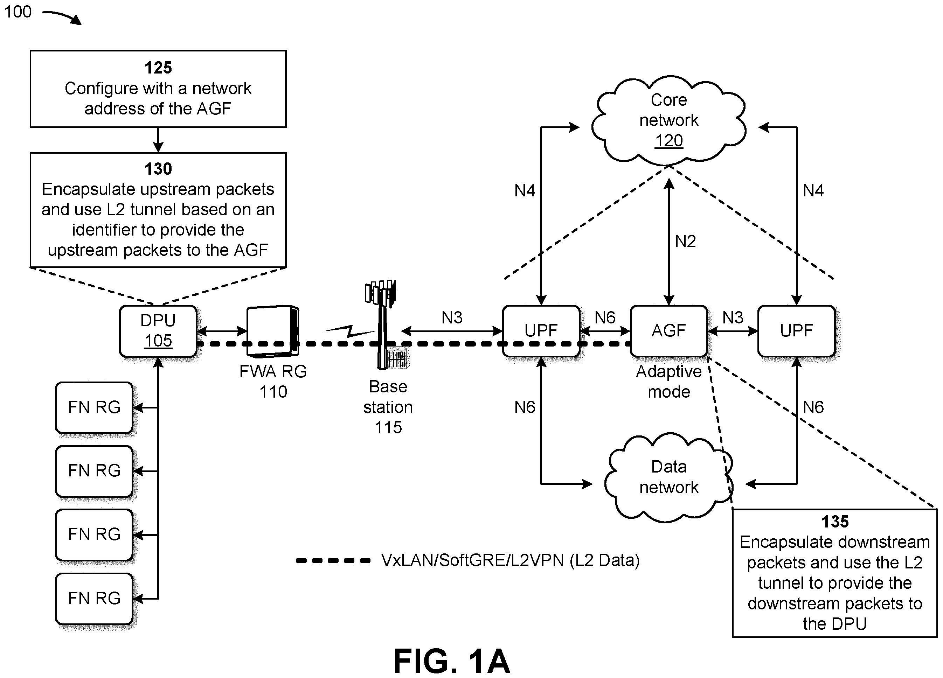

Figs. 1A-1D are diagrams of an example 100 associated with providing an MDU FWA mechanism. As shown in Figs. 1A-1D, example 100 includes a DPU 105 and/or an FWA RG 110 associated with a plurality of FN RGs, 5G RGs, or RGs. The DPU 105 and/or the FWA RG 110 may be associated with a base station 115 that communicates with a core network 120 and/or a data network. The core network 120 may include UPFs, an AGF, a remote authentication dial-in user service (RADIUS) device, and/or a BNG. Further details of the DPU 105, the FWA RG 110, the FN RGs, the 5G RGs, the RGs, the base station 115, the core network 120, the data network, the UPFs, the AGF, the RADIUS device, and the BNG are provided elsewhere herein.

As further shown in Fig. 1A, the DPU or the FWA RG 110 may be connected to the multiple FN RGs and may wirelessly communicate with the base station 115. The base station 115 may connect with one of the UPFs via an N3 interface, and the UPFs may connect with the AGF via N6 interfaces. The UPFs may connect with the core network 120 (e.g., a 5G Control Plane session management function (SMF)) via N4 interfaces, and may connect with the data network via N6 interfaces. The AGF may be in an adaptive mode and may connect with the core network 120 (e.g., a 5G Control Plane access and mobility management function (AMF)) via an N2 interface.

As further shown in Fig. 1A, and by reference number 125, the DPU 105 may be configured with a network address of the AGF (e.g., for pure 5G use cases). For example, in order to communicate with the AGF, the DPU 105 may be configured with an IP address of the AGF. The DPU 105 may utilize an L2 tunnel with an identifier per subscriber. In some implementations, the L2 tunnel may include a VxLAN tunnel (e.g., a pseudowire (PW)), a network virtualization using a SoftGRE) tunnel, an L2VPN tunnel, and/or the like. The DPU 105 may utilize an identifier to identify the L2 tunnel for each subscriber. The identifier may include a VxLAN identifier (VID), a service provider network VLAN (SVLAN) identifier, a customer network VLAN (CVLAN) identifier, and/or the like.

As further shown in Fig. 1A, and by reference number 130, the DPU 105 may encapsulate upstream packets (e.g., from the FN RGs), and may use the L2 tunnel based on the identifier to provide the upstream packets to the AGF. For example, the DPU 105 may encapsulate the upstream packets with an L2 tunnel header (e.g., a VxLAN header, a SoftGRE header, or an L2VPN header) directed to the AGF. In some implementations, the DPU 105 may act as a DHCP relay agent or a PPPoE intermediatory agent and may add a line identifier into respective control packets (e.g., for authentication). The FWA RG 110 may establish an IPv4, an IPv6, or an IPv4v6 PDU session with the core network 120 using an FWA wireless interface. The DPU 105 may encapsulate the upstream packets before providing the upstream packets to the AGF via the PDU session and over the FWA wireless interface.

As further shown in Fig. 1A, and by reference number 135, the AGF may encapsulate downstream packets (e.g., destined for the FN RGs), and may use the L2 tunnel to provide the downstream packets to the DPU 105. For example, the AGF may encapsulate the downstream packets with an L2 tunnel header (e.g., a VxLAN header, a SoftGRE header, or an L2VPN header) directed to the DPU 105. The AGF may encapsulate the downstream packets before providing the downstream packets to the DPU 105 via the PDU session and over the FWA wireless interface. In some implementations, the AGF may route the downstream packets to the UPF over the N6 interface, and the UPF may route the downstream packets to the DPU 105 over the N3 interface. In some implementations, the AGF may be configured to provide subscriber management over the L2 tunnel.

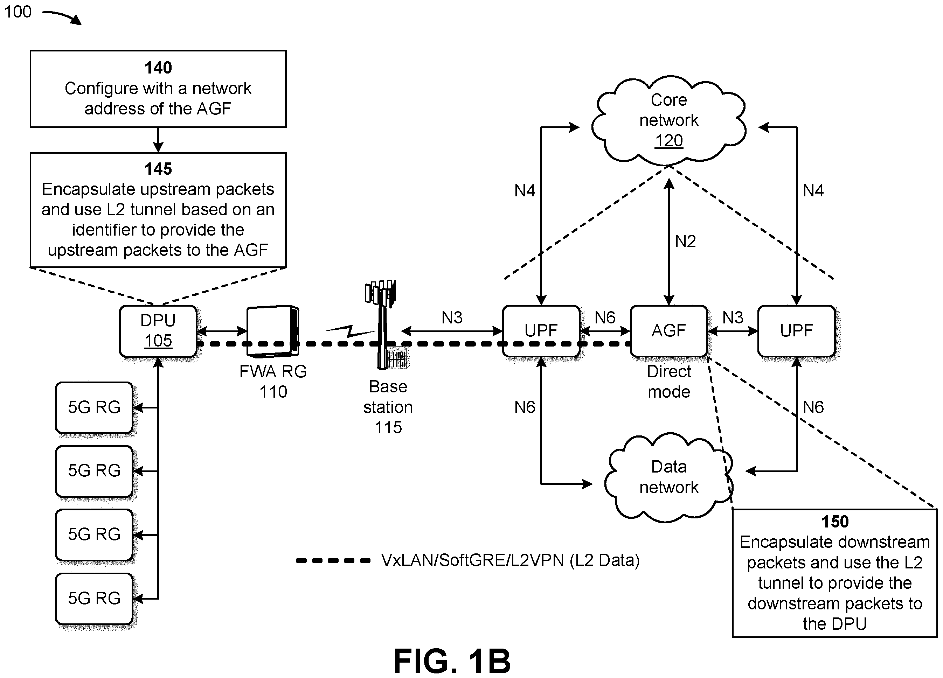

As shown in Fig. 1B, the DPU 105 or the FWA RG 110 may be connected to multiple 5G RGs rather than to multiple FN RGs, as described above in connection with Fig. 1A. Furthermore, the AGF may be in a direct mode rather than in the adaptive mode, as described above in connection with Fig. 1A. As shown, the L2 tunnel may be provided between the DPU 105 and the AGF, via the base station 115 and the UPF. Traffic (e.g., packets) may be provided over the L2 tunnel.

As further shown in Fig. 1B, and by reference number 140, the DPU 105 may be configured with the network address of the AGF (e.g., for pure 5G use cases). For example, in order to communicate with the AGF, the DPU 105 may be configured with the IP address of the AGF. The DPU 105 may utilize the L2 tunnel with an identifier per subscriber. In some implementations, the L2 tunnel may include a VxLAN tunnel, a SoftGRE tunnel, an L2VPN tunnel, and/or the like. The DPU 105 may utilize an identifier to identify the L2 tunnel for each subscriber. The identifier may include a VID, an SVLAN identifier, a CVLAN identifier, and/or the like.

As further shown in Fig. 1B, and by reference number 145, the DPU 105 may encapsulate upstream packets (e.g., from the 5G RGs), and may use the L2 tunnel based on the identifier to provide the upstream packets to the AGF. For example, the DPU 105 may encapsulate the upstream packets with the L2 tunnel header (e.g., a VxLAN header, a SoftGRE header, or an L2VPN header) directed to the AGF. In some implementations, the DPU 105 may act as a DHCP relay agent or a PPPoE intermediatory agent and may add a line identifier into respective control packets (e.g., for authentication). The FWA RG 110 may establish an IPv4, an IPv6, or an IPv4v6 PDU session with the core network 120 using the FWA wireless interface. The DPU 105 may encapsulate the upstream packets before providing the upstream packets to the AGF via the PDU session and over the FWA wireless interface.

As further shown in Fig. 1B, and by reference number 150, the AGF may encapsulate downstream packets (e.g., destined for the 5G RGs), and may use the L2 tunnel to provide the downstream packets to the DPU 105. For example, the AGF may encapsulate the downstream packets with the L2 tunnel header (e.g., a VxLAN header, a SoftGRE header, or an L2VPN header) directed to the DPU 105. The AGF may encapsulate the downstream packets before providing the downstream packets to the DPU 105 via the PDU session and over the FWA wireless interface. In some implementations, the AGF may route the downstream packets to the UPF over the N6 interface, and the UPF may route the downstream packets to the DPU 105 over the N3 interface. In some implementations, the AGF may be configured to provide subscriber management over the L2 tunnel.

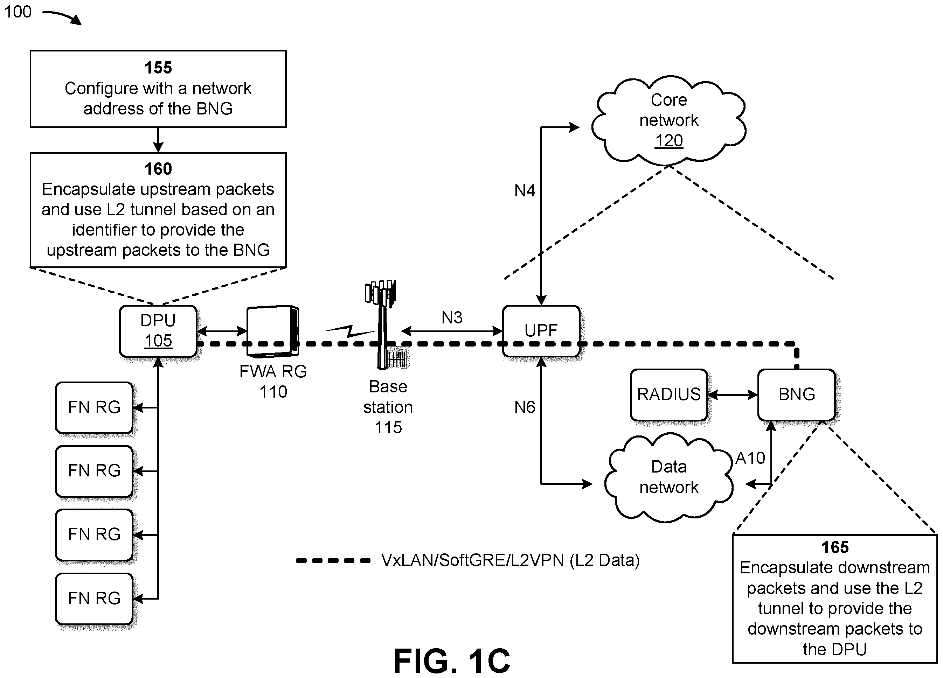

As shown in Fig. 1C, the AGF and one of the UPFs may be removed and replaced with the RADIUS device and the BNG. The BNG may connect with the data network via an A10 interface. In such an arrangement, the L2 tunnel may be provided between the DPU 105 and the BNG, via the base station 115 and the UPF. Traffic (e.g., packets) may be provided over the L2 tunnel.

As further shown in Fig. 1C, and by reference number 155, the DPU 105 may be configured with the network address of the BNG (e.g., for converged use cases). For example, in order to communicate with the BNG, the DPU 105 may be configured with the IP address of the BNG. The DPU 105 may utilize the L2 tunnel with an identifier per subscriber. In some implementations, the L2 tunnel may include a VxLAN tunnel, a SoftGRE tunnel, an L2VPN tunnel, and/or the like. The DPU 105 may utilize an identifier to identify the L2 tunnel for each subscriber. The identifier may include a VID, an SVLAN identifier, a CVLAN identifier, and/or the like.

As further shown in Fig. 1C, and by reference number 160, the DPU 105 may encapsulate upstream packets (e.g., from the FN RGs), and may use the L2 tunnel based on the identifier to provide the upstream packets to the BNG. For example, the DPU 105 may encapsulate the upstream packets with the L2 tunnel header (e.g., a VxLAN header, a SoftGRE header, or an L2VPN header) directed to the BNG. In some implementations, the DPU 105 may act as a DHCP relay agent or a PPPoE intermediatory agent and may add a line identifier into respective control packets (e.g., for authentication). The FWA RG 110 may establish an IPv4, an IPv6, or an IPv4v6 PDU session with the core network 120 using the FWA wireless interface. The DPU 105 may encapsulate the upstream packets before providing the upstream packets to the BNG via the PDU session and over the FWA wireless interface.

As further shown in Fig. 1C, and by reference number 165, the BNG may encapsulate downstream packets (e.g., destined for the FN RGs), and may use the L2 tunnel to provide the downstream packets to the DPU 105. For example, the BNG may encapsulate the downstream packets with the L2 tunnel header (e.g., a VxLAN header, a SoftGRE header, or an L2VPN header) directed to the DPU 105. The BNG may encapsulate the downstream packets before providing the downstream packets to the DPU 105 via the PDU session and over the FWA wireless interface. In some implementations, the BNG may route the downstream packets to the UPF over the N6 interface, and the UPF may route the downstream packets to the DPU 105 over the N3 interface. In some implementations, the BNG may be configured to provide subscriber management over the L2 tunnel.

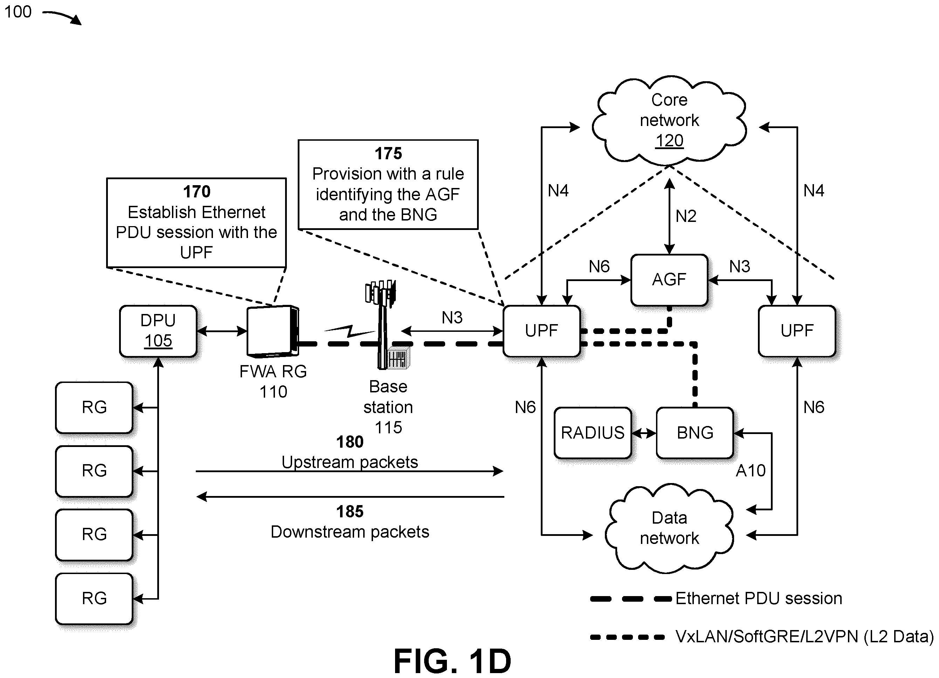

As shown in Fig. 1D, the RADIUS device and the BNG may be included with the AGF, and both of the UPFs, and RGs may be connected to the DPU 105. As further shown in Fig. 1D, and by reference number 170, the FWA RG 110 may establish an Ethernet PDU session with the UPF. The core network 120 may be configured with IP addresses of the BNG and the AGF per each FWA RG 110.

As further shown in Fig. 1D, and by reference number 175, the UPF may be provisioned with a rule identifying the AGF and the BNG. For example, during the Ethernet PDU session, the UPF may be provisioned with a forwarding action rule (FAR) indicating the BNG, the AGF, and a unique identifier (e.g., a VID) for the FWA RG 110. The UPF may also be provisioned with an FAR for upstream packets that associates a GTP fully qualified tunnel endpoint identifier (FTEID) with the BNG, the AGF, and the unique identifier for the FWA RG 110; with an FAR for the upstream packets that provides the aforementioned information as an encapsulation string toward the N6 interface; with an FAR for the downstream packets that associates the BNG, the AGF, and the unique identifier with the GTP FTEID; and with an FAR for the downstream packets that provides the aforementioned information as an encapsulation string toward the N3 interface. In some implementations, the DPU 105 may act as a DHCP relay agent or a PPPoE intermediatory agent, and may add a line identifier into respective control packets (e.g., for authentication).

As further shown in Fig. 1D, and by reference number 180, upstream packets may be provided from the RGs to the AGF and/or the BNG via the UPF. In some implementations, the FWA RG 110 may encapsulate the upstream packets into GTP, and may provide the encapsulated upstream packets to the UPF via the base station 115. The UPF may decapsulate the GTP from the encapsulated upstream packets, and may apply services to the upstream packets. The UPF may encapsulate the upstream packets with the L2 tunnel header (e.g., a VxLAN header, a SoftGRE header, or an L2VPN header) directed to the AGF and/or the BNG. The UPF may encapsulate the upstream packets before providing the upstream packets to the AGF and/or the BNG.

As further shown in Fig. 1D, and by reference number 185, downstream packets may be provided from the AGF and/or the BNG to the RGs via the UPF and the base station 115. The AGF or the BNG may encapsulate the downstream packets (e.g., destined for the RGs), and may use the L2 tunnel to provide the downstream packets to the UPF. For example, the AGF or the BNG may encapsulate the downstream packets with the L2 tunnel header (e.g., a VxLAN header, a SoftGRE header, or an L2VPN header) directed to the UPF. The AGF or the BNG may encapsulate the downstream packets before providing the downstream packets to the UPF. In some implementations, the AGF or the BNG may be configured to provide subscriber management over the L2 tunnel, where each MDU may be treated as a unique subscriber based on a line identifier inserted by the DPU 105. The UPF may decapsulate the encapsulated downstream packets, and may apply services to the downstream packets. The UPF may encapsulate the downstream packets into GTP, and may provide the encapsulated downstream packets toward the RGs, via the base station 115. In some implementations, the upstream packets and the downstream packets may be provided over the L2 tunnel via IP and/or multiprotocol label switching (MPLS).

In this way, the device provides an MDU FWA mechanism. For example, the DPU 105 or the FWA RG 110 may be configured with an IP address of the BNG (e.g., for converged use cases) and the AGF (e.g., for pure 5G use cases). The DPU 105 or the FWA RG 110 may utilize a VxLAN tunnel, a SoftGRE tunnel, or an L2VPN tunnel with a tunnel identifier per subscriber. The DPU 105 may act as a DHCP relay agent or a PPPoE intermediatory agent, and may add a line identifier into respective control packets (e.g., for authentication). The FWA RG 110 may establish an IPv4, an IPv6, or an IPv4v6 PDU session with the 5G core network using a wireless interface. Subscriber RG packets may be encapsulated into a VxLAN header by the DPU 105 or the FWA RG 110 before being sent to the PDU session over an FWA wireless interface destined for the BNG or the AGF. In the downstream, the BNG or the AGF may encapsulate subscriber traffic with the VxLAN encapsulation and may route the traffic back to the UPF, which will route the traffic to the subscriber over an N3 interface. The DPU or the FWA RG will decapsulate the VxLAN tunnel headers before delivering the packet to the subscriber. The BNG and the AGF may be configured to provide subscriber management over VxLAN.

Thus, the device (e.g., the DPU, the FWA RG, the UPF, the AGF, and/or the BNG) may conserve computing resources, networking resources, and/or other resources that would have otherwise been consumed by failing to support forwarding of L2 packets from the UPF to the AGF, failing to handle PDU sessions associated with the L2 packets, losing traffic due to failing to handle the PDU sessions, providing a poor user experience due to failing to handle the PDU sessions, and/or the like.

As indicated above, Figs. 1A-1D are provided as an example. Other examples may differ from what is described with regard to Figs. 1A-1D. The number and arrangement of devices shown in Figs. 1A-1D are provided as an example. In practice, there may be additional devices, fewer devices, different devices, or differently arranged devices than those shown in Figs. 1A-1D. Furthermore, two or more devices shown in Figs. 1A-1D may be implemented within a single device, or a single device shown in Figs. 1A-1D may be implemented as multiple, distributed devices. Additionally, or alternatively, a set of devices (e.g., one or more devices) shown in Figs. 1A-1D may perform one or more functions described as being performed by another set of devices shown in Figs. 1A-1D.

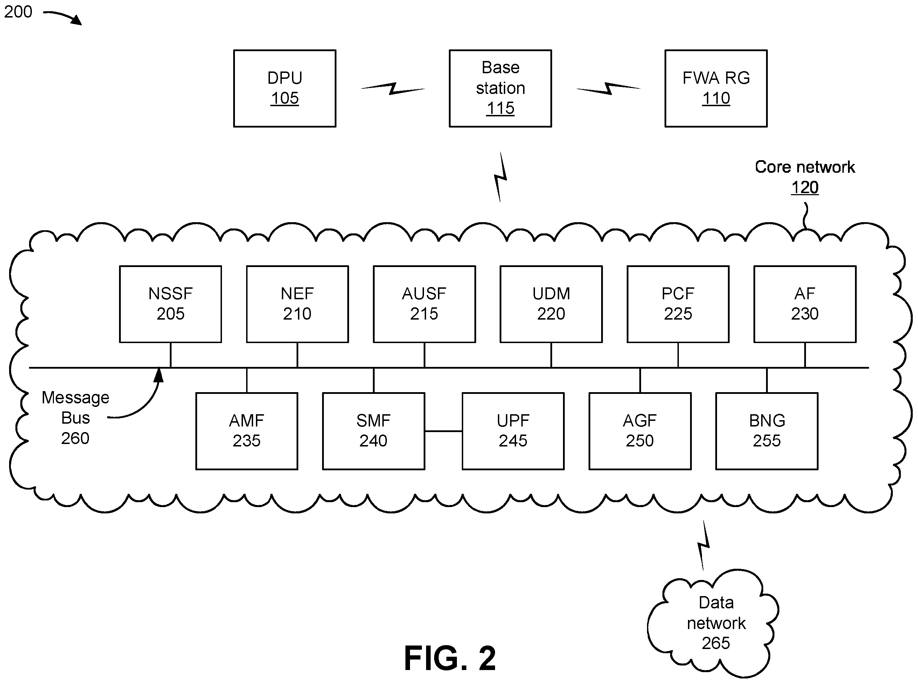

Fig. 2 is a diagram of an example environment 200 in which systems and/or methods described herein may be implemented. As shown in Fig. 2, example environment 200 may include the DPU 105, the FWA RG 110, the base station 115, the core network 120, and a data network 265. Devices and/or networks of the example environment 200 may interconnect via wired connections, wireless connections, or a combination of wired and wireless connections.

The DPU 105 includes one or more devices capable of receiving, generating, storing, processing, and/or providing information, such as information described herein. For example, the DPU 105 may include an infrastructure processing unit (IPU), a smart network interface card (NIC), a system-on-chip (SoC)-based NIC that can perform processing and analysis of a network, security, storage for datasets, and/or the like. The DPU 105 may include a programmable computer processor that tightly integrates a general-purpose central processing unit (CPU) with network interface hardware. The DPU 105 may be used in place of traditional NICs to relieve a main CPU of complex networking responsibilities and other infrastructural functions, to perform encryption/decryption, to serve as a firewall, to handle protocols, to process network requests, to function as a hypervisor or storage controller, and/or the like.

The FWA RG 110 includes one or more devices capable of receiving, generating, storing, processing, and/or providing information, such as information described herein. For example, the FWA RG 110 may include a mobile hotspot device, an FWA device, a customer premises equipment (CPE), an FWA channel service unit, an FWA data service unit, an FWA router, an FWA wireless access point (WAP) device, an FWA modem, an FWA set-top box, or a similar type of device. The FWA RG 110 may provide wireless connectivity through radio links between two fixed points. In other words, the FWA RG 110 may provide wireless Internet access to homes or businesses without laying fiber and cables to provide last mile connectivity.

The base station 115 includes one or more devices capable of transferring traffic, such as audio, video, text, and/or other traffic, destined for and/or received from a user equipment. For example, the base station 115 may include an eNodeB (eNB) associated with a long term evolution (LTE) network that receives traffic from and/or sends traffic to a core network, a gNodeB (gNB) associated with a radio access network (RAN) of a 5G network, a base transceiver station, a radio base station, a base station subsystem, a cellular site, a cellular tower, an access point, a transmit receive point (TRP), a radio access node, a macrocell base station, a microcell base station, a picocell base station, a femtocell base station, and/or another network entity capable of supporting wireless communication. The base station 115 may support, for example, a cellular radio access technology (RAT). The base station 115 may transfer traffic between a user equipment (e.g., using a cellular RAT), one or more other base stations 115 (e.g., using a wireless interface or a backhaul interface, such as a wired backhaul interface), and/or a core network. The base station 115 may provide one or more cells that cover geographic areas.

In some implementations, the base station 115 may perform scheduling and/or resource management for FWA RG 110 covered by the base station 115 (e.g., the FWA RG 110 covered by a cell provided by the base station 115). In some implementations, the base station 115 may be controlled or coordinated by a network controller, which may perform load balancing, network-level configuration, and/or other operations. The network controller may communicate with the base station 115 via a wireless or wireline backhaul. In some implementations, the base station 115 may include a network controller, a self-organizing network (SON) module or component, or a similar module or component. In other words, the base station 115 may perform network control, scheduling, and/or network management functions (e.g., for uplink, downlink, and/or sidelink communications of FWA RG 110 covered by the base station 115).

In some implementations, the core network 120 may include an example functional architecture in which systems and/or methods described herein may be implemented. For example, the core network 120 may include an example architecture of a 5G next generation (NG) core network included in a 5G wireless telecommunications system. While the example architecture of the core network 120 shown in Fig. 2 may be an example of a service-based architecture, in some implementations, the core network 120 may be implemented as a reference-point architecture and/or a 4G core network, among other examples.

As shown in Fig. 2, the core network 120 may include a number of functional elements. The functional elements may include, for example, a network slice selection function (NSSF) 205, a network exposure function (NEF) 210, an authentication server function (AUSF) 215, a unified data management (UDM) component 220, a policy control function (PCF) 225, an application function (AF) 230, an access and mobility management function (AMF) 235, a session management function (SMF) 240, a UPF 245, an AGF 250, and/or a BNG 255. These functional elements may be communicatively connected via a message bus 260. Each of the functional elements shown in Fig. 2 is implemented on one or more devices associated with a wireless telecommunications system. In some implementations, one or more of the functional elements may be implemented on physical devices, such as an access point, a base station, and/or a gateway. In some implementations, one or more of the functional elements may be implemented on a computing device of a cloud computing environment.

The NSSF 205 includes one or more devices that select network slice instances for the FWA RG 110. By providing network slicing, the NSSF 205 allows an operator to deploy multiple substantially independent end-to-end networks potentially with the same infrastructure. In some implementations, each slice may be customized for different services.

The NEF 210 includes one or more devices that support exposure of capabilities and/or events in the wireless telecommunications system to help other entities in the wireless telecommunications system discover network services.

The AUSF 215 includes one or more devices that act as an authentication server and support the process of authenticating the FWA RG 110 in the wireless telecommunications system.

The UDM 220 includes one or more devices that store user data and profiles in the wireless telecommunications system. The UDM 220 may be used for fixed access and/or mobile access in the core network 120.

The PCF 225 includes one or more devices that provide a policy framework that incorporates network slicing, roaming, packet processing, and/or mobility management, among other examples.

The AF 230 includes one or more devices that support application influence on traffic routing, access to the NEF 210, and/or policy control, among other examples.

The AMF 235 includes one or more devices that act as a termination point for non-access stratum (NAS) signaling and/or mobility management, among other examples.

The SMF 240 includes one or more devices that support the establishment, modification, and release of communication sessions in the wireless telecommunications system. For example, the SMF 240 may configure traffic steering policies at the UPF 245 and/or may enforce user equipment IP address allocation and policies, among other examples.

The UPF 245 includes one or more devices that serve as an anchor point for intraRAT and/or interRAT mobility. The UPF 245 may apply rules to packets, such as rules pertaining to packet routing, traffic reporting, and/or handling user plane QoS, among other examples.

The AGF 250 includes one or more devices that provide authentication, authorization and accounting (AAA) services and hierarchical traffic shaping and policing for FN and 5G RGs being served from the UPF 245.

The BNG 255 includes one or more devices that provide subscribers with access to a broadband network and that connect subscribers to a service provider network. The BNG 255 may aggregate traffic from a plurality of subscribers and may route the traffic to the service provider network.

The message bus 260 represents a communication structure for communication among the functional elements. In other words, the message bus 260 may permit communication between two or more functional elements.

The data network 265 includes one or more wired and/or wireless data networks. For example, the data network 265 may include an IP Multimedia Subsystem (IMS), a public land mobile network (PLMN), a local area network (LAN), a wide area network (WAN), a metropolitan area network (MAN), a private network such as a corporate intranet, an ad hoc network, the Internet, a fiber optic-based network, a cloud computing network, a third party services network, an operator services network, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the example environment 200 may perform one or more functions described as being performed by another set of devices of the example environment 200.

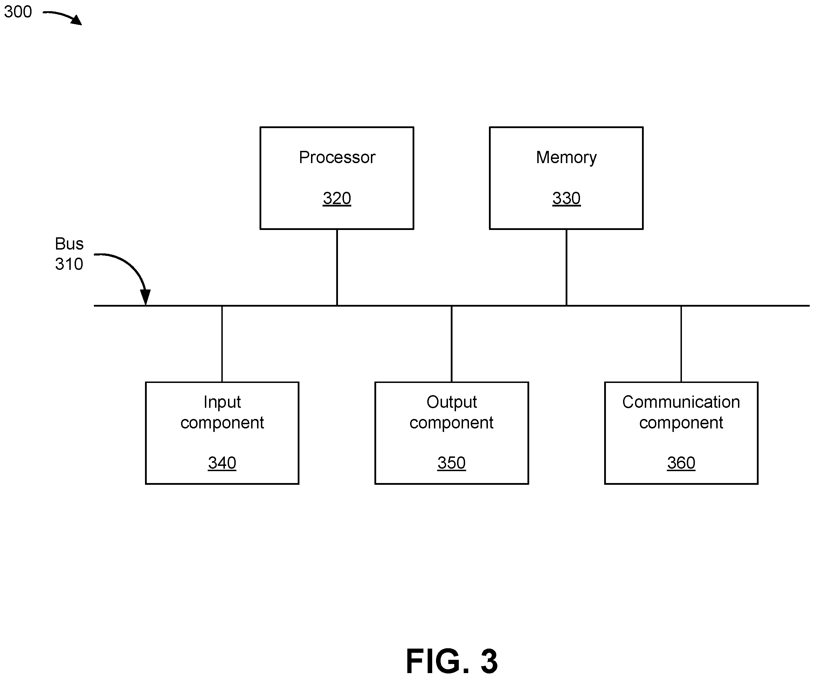

Fig. 3 is a diagram of example components of a device 300, which may correspond to the DPU 105, the FWA RG 110, the base station 115, the NSSF 205, the NEF 210, the AUSF 215, the UDM 220, the PCF 225, the AF 230, the AMF 235, the SMF 240, the UPF 245, the AGF 250, and/or the BNG 255. In some implementations, the DPU 105, the FWA RG 110, the base station 115, the NSSF 205, the NEF 210, the AUSF 215, the UDM 220, the PCF 225, the AF 230, the AMF 235, the SMF 240, the UPF 245, the AGF 250, and/or the BNG 255 may include one or more devices 300 and/or one or more components of the device 300. As shown in Fig. 3, the device 300 may include a bus 310, a processor 320, a memory 330, an input component 340, an output component 350, and a communication component 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit (CPU), a graphics processing unit (GPU), a microprocessor, a controller, a microcontroller, a digital signal processor (DSP), a field-programmable gate array (FPGA), an application-specific integrated circuit (ASIC), and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication component 360 enables the device 300 to communicate with other devices via a wired connection and/or a wireless connection. For example, the communication component 360 may include a receiver, a transmitter, a transceiver, a modem, a network interface card, and/or an antenna. The communication component 360 may be used to receive

(and/or send) information, instructions, and/or software (e.g., one or more software applications) that may be stored in the memory 330.

The device 300 may perform one or more operations or processes described herein. For example, a non-transitory computer-readable medium (e.g., the memory 330) may store a set of instructions (e.g., one or more instructions or code) for execution by the processor 320 (which may have been received via a communication medium to the communication component 360). The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

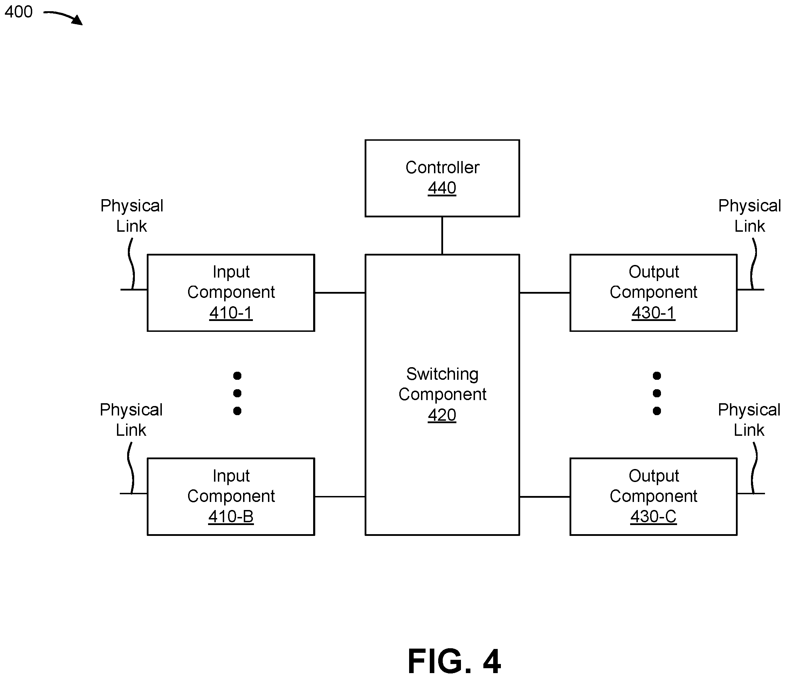

Fig. 4 is a diagram of example components of one or more devices of Fig. 2. The example components may be included in a device 400. The device 400 may correspond to the DPU 105, the FWA RG 110, the AGF 250, and/or the BNG 255. In some implementations, the DPU 105, the FWA RG 110, the AGF 250, and/or the BNG 255 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions provided from a computer-readable medium. A computer-readable medium may include a computer-readable storage medium and/or a computer-readable transmission medium. A computer readable storage medium is defined herein as a non-transitory memory device. A memory device includes memory space within a single physical storage device or memory space spread across multiple physical storage devices. A computer-readable transmission medium (by which instructions may be conveyed) may include carrier waves, transmission signals or the like. A computer-readable transmission medium may convey instructions between components of a single computer system and/or between plural separate computer systems.

Software instructions may be read into a memory and/or storage component associated with the controller 440 from another computer-readable medium or from another device via a communication interface. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

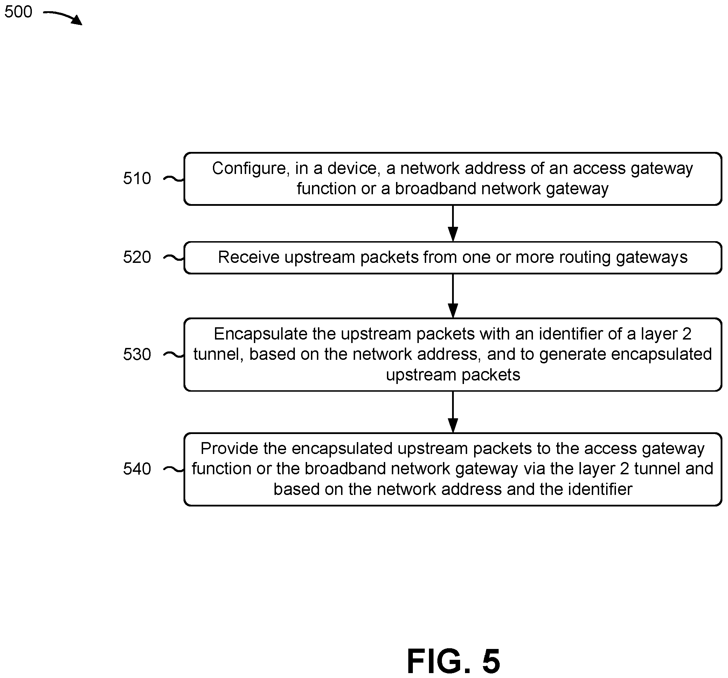

Fig. 5 is a flowchart of an example process 500 for providing an MDU FWA mechanism. In some implementations, one or more process blocks of Fig. 5 may be performed by a device (e.g., the DPU 105). In some implementations, one or more process blocks of Fig. 5 may be performed by another device or a group of devices separate from or including the device, such as an FWA RG (e.g., the FWA RG 110), a UPF (e.g., the UPF 245), an AGF (e.g., the AGF 250), a BNG (e.g., the BNG 255), and/or the like. Additionally, or alternatively, one or more process blocks of Fig. 5 may be performed by one or more components of the device 300, such as the processor 320, the memory 330, the input component 340, the output component 350, and/or the communication interface 360. Additionally, or alternatively, one or more process blocks of Fig. 5 may be performed by one or more components of the device 400, such as the input component 410, the switching component 420, the output component 430, and/or the controller 440.

As shown in Fig. 5, process 500 may include configuring, in a device, a network address of an access gateway function or a broadband network gateway (block 510). For example, the device may configure, in the device, a network address of an access gateway function or a broadband network gateway, as described above. In some implementations, the access gateway function operates in one of an adaptive mode or a direct mode.

As further shown in Fig. 5, process 500 may include receiving upstream packets from one or more routing gateways (block 520). For example, the device may receive upstream packets from one or more routing gateways, as described above. In some implementations, each of the one or more routing gateways is one of a fixed network routing gateway or a fifth-generation routing gateway. In some implementations, the one or more routing gateways are associated with a multiple dwelling unit.

As further shown in Fig. 5, process 500 may include encapsulating the upstream packets with an identifier of a layer 2 tunnel, based on the network address, and to generate encapsulated upstream packets (block 530). For example, the device may encapsulate the upstream packets with an identifier of a layer 2 tunnel, based on the network address, and to generate encapsulated upstream packets, as described above. In some implementations, the encapsulated upstream packets are destined for a core network. In some implementations, the layer 2 tunnel is one of a virtual extensible local area network tunnel, a network virtualization using generic routing encapsulation tunnel, or a layer 2 virtual private network tunnel. In some implementations, the identifier of the layer 2 tunnel includes one of a virtual extensible local area network identifier, a service provider network virtual local area network (VLAN) identifier, or a customer network VLAN identifier.

As further shown in Fig. 5, process 500 may include providing the encapsulated upstream packets to the access gateway function or the broadband network gateway via the layer 2 tunnel and based on the network address and the identifier (block 540). For example, the device may provide the encapsulated upstream packets to the access gateway function via the layer 2 tunnel and based on the network address and the identifier, as described above.

In some implementations, process 500 includes receiving encapsulated downstream packets from the access gateway function or the broadband network gateway, decapsulating the encapsulated downstream packets to generate downstream packets, and providing the downstream packets to the one or more routing gateways.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

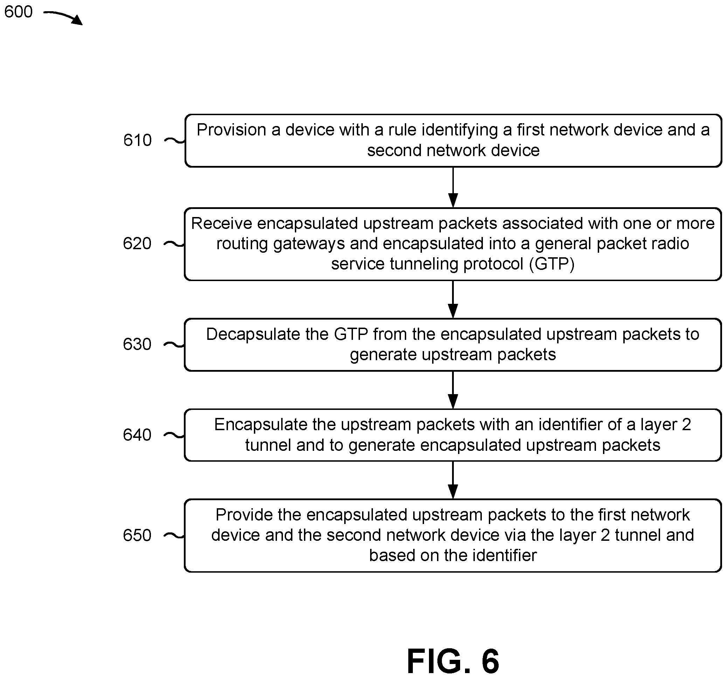

Fig. 6 is a flowchart of an example process 600 for providing an MDU FWA mechanism. In some implementations, one or more process blocks of Fig. 6 may be performed by a device (e.g., the UPF 245). In some implementations, one or more process blocks of Fig. 5 may be performed by another device or a group of devices separate from or including the device, such as a DPU (e.g., the DPU 105), an FWA RG (e.g., the FWA RG 110), an AGF (e.g., the AGF 250), a BNG (e.g., the BNG 255), and/or the like. Additionally, or alternatively, one or more process blocks of Fig. 6 may be performed by one or more components of the device 300, such as the processor 320, the memory 330, the input component 340, the output component 350, and/or the communication interface 360. Additionally, or alternatively, one or more process blocks of Fig. 6 may be performed by one or more components of the device 400, such as the input component 410, the switching component 420, the output component 430, and/or the controller 440.

As shown in Fig. 6, process 600 may include provisioning the device with a rule identifying a first network device and a second network device (block 610). For example, the device may provision the device with a rule identifying a first network device and a second network device, as described above. In some implementations, the first network device is an access gateway function and the second network device is a broadband network gateway. In some implementations, the device is a user plane function.

As further shown in Fig. 6, process 600 may include receiving encapsulated upstream packets associated with one or more routing gateways and encapsulated into a general packet radio service tunneling protocol (GTP) (block 620). For example, the device may receive encapsulated upstream packets associated with one or more routing gateways and encapsulated into a GTP, as described above. In some implementations, the one or more routing gateways are associated with a multiple dwelling unit. In some implementations, each of the one or more routing gateways is a fixed network routing gateway or a fifth-generation routing gateway.

As further shown in Fig. 6, process 600 may include decapsulating the GTP from the encapsulated upstream packets to generate upstream packets (block 630). For example, the device may decapsulate the GTP from the encapsulated upstream packets to generate upstream packets, as described above.

As further shown in Fig. 6, process 600 may include encapsulating the upstream packets with an identifier of a layer 2 tunnel and to generate encapsulated upstream packets (block 640). For example, the device may encapsulate the upstream packets with an identifier of a layer 2 tunnel and to generate encapsulated upstream packets, as described above.

As further shown in Fig. 6, process 600 may include providing the encapsulated upstream packets to the first network device and the second network device via the layer 2 tunnel and based on the identifier (block 650). For example, the device may provide the encapsulated upstream packets to the first network device and the second network device via the layer 2 tunnel and based on the identifier, as described above.

In some implementations, process 600 includes receiving, from the first network device or the second network device, encapsulated downstream packets via the layer 2 tunnel, decapsulating the identifier of the layer 2 tunnel from the encapsulated downstream packets to generate downstream packets, encapsulating the downstream packets into a general packet radio service tunneling protocol and to generate encapsulated downstream packets, and providing the encapsulated downstream packets toward the one or more routing gateways.

Therefore, from one perspective, there has been described a device that is able to configure, in the device, a network address of an access gateway function, and may receive upstream packets from one or more routing gateways. The device may encapsulate the upstream packets with an identifier of a layer 2 tunnel, based on the network address, and to generate encapsulated upstream packets, and may provide the encapsulated upstream packets to the access gateway function via the layer 2 tunnel and based on the network address and the identifier. The device may receive encapsulated downstream packets from the access gateway function, and may decapsulate the encapsulated downstream packets to generate downstream packets. The device may provide the downstream packets to the one or more routing gateways.

Further examples are set out in the following numbered clauses.
Clause 1. A method, comprising: configuring, in a device, a network address of an access gateway function; receiving, by the device, upstream packets from one or more routing gateways; encapsulating, by the device, the upstream packets with an identifier of a layer 2 tunnel, based on the network address, and to generate encapsulated upstream packets; and providing, by the device, the encapsulated upstream packets to the access gateway function via the layer 2 tunnel and based on the network address and the identifier.
Clause 2. The method of clause 1, further comprising: receiving encapsulated downstream packets from the access gateway function; decapsulating the encapsulated downstream packets to generate downstream packets; and providing the downstream packets to the one or more routing gateways.
Clause 3. The method of clause 1 or 2, wherein each of the one or more routing gateways is one of a fixed network routing gateway or a fifth-generation routing gateway.
Clause 4. The method of clause 1, 2 or 3, wherein the access gateway function operates in one of an adaptive mode or a direct mode.
Clause 5. The method of any of clauses 1 to 4, wherein the encapsulated upstream packets are destined for a core network.
Clause 6. The method of any of clauses 1 to 5, wherein the layer 2 tunnel is one of a virtual extensible local area network tunnel, a network virtualization using generic routing encapsulation tunnel, or a layer 2 virtual private network tunnel.
Clause 7. The method of any of clauses 1 to 6, wherein the identifier of the layer 2 tunnel includes one of a virtual extensible local area network identifier, a service provider network virtual local area network (VLAN) identifier, or a customer network VLAN identifier.
Clause 8. A device, comprising: one or more memories; and one or more processors to: configure, in a device, a network address of a broadband network gateway; receive upstream packets from one or more routing gateways; encapsulate the upstream packets with an identifier of a layer 2 tunnel, based on the network address, and to generate encapsulated upstream packets; and provide the encapsulated upstream packets to the broadband network gateway via the layer 2 tunnel and based on the network address and the identifier.
Clause 9. The device of clause 8, wherein the one or more processors are further to: receive encapsulated downstream packets from the broadband network gateway; decapsulate the encapsulated downstream packets to generate downstream packets; and provide the downstream packets to the one or more routing gateways.
Clause 10. The device of clause 8 or 9, wherein each of the one or more routing gateways is a fixed network routing gateway.
Clause 11. The device of clause 8, 9 or 10, wherein the encapsulated upstream packets are destined for a core network.
Clause 12. The device of any of clauses 8 to 11, wherein the layer 2 tunnel is one of a virtual extensible local area network tunnel, a network virtualization using generic routing encapsulation tunnel, or a layer 2 virtual private network tunnel.
Clause 13. The device of any of clauses 8 to 12, wherein the identifier of the layer 2 tunnel includes one of a virtual extensible local area network identifier, a service provider network virtual local area network (VLAN) identifier, or a customer network VLAN identifier.
Clause 14. The device of any of clauses 8 to 13, wherein the one or more routing gateways are associated with a multiple dwelling unit.
Clause 15. A computer-readable medium comprising a set of instructions, the set of instructions comprising: one or more instructions that, when executed by one or more processors of a device, cause the device to: provision the device with a rule identifying a first network device and a second network device; receive encapsulated upstream packets associated with one or more routing gateways and encapsulated into a general packet radio service tunneling protocol (GTP); decapsulate the GTP from the encapsulated upstream packets to generate upstream packets; encapsulate the upstream packets with an identifier of a layer 2 tunnel and to generate encapsulated upstream packets; and provide the encapsulated upstream packets to the first network device and the second network device via the layer 2 tunnel and based on the identifier.
Clause 16. The computer-readable medium of clause 15, wherein the one or more instructions further cause the device to: receive, from the first network device or the second network device, encapsulated downstream packets via the layer 2 tunnel; decapsulate the identifier of the layer 2 tunnel from the encapsulated downstream packets to generate downstream packets; encapsulate the downstream packets into a general packet radio service tunneling protocol and to generate encapsulated downstream packets; and provide the encapsulated downstream packets toward the one or more routing gateways.
Clause 17. The computer-readable medium of clause 15 or 16, wherein the first network device is an access gateway function and the second network device is a broadband network gateway.
Clause 18. The computer-readable medium of clause 15, 16 or 17, wherein the device is a user plane function.
Clause 19. The computer-readable medium of any of clauses 15 to 18, wherein the one or more routing gateways are associated with a multiple dwelling unit.
Clause 20. The computer-readable medium of any of clauses 15 to 19, wherein each of the one or more routing gateways is a fixed network routing gateway or a fifth-generation routing gateway.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

## Claims

1. A method, comprising:
configuring, in a device, a network address of an access gateway function;
receiving, by the device, upstream packets from one or more routing gateways;
encapsulating, by the device, the upstream packets with an identifier of a layer 2 tunnel, based on the network address, and to generate encapsulated upstream packets; and
providing, by the device, the encapsulated upstream packets to the access gateway function via the layer 2 tunnel and based on the network address and the identifier.

2. The method of claim 1, further comprising:
receiving encapsulated downstream packets from the access gateway function;
decapsulating the encapsulated downstream packets to generate downstream packets; and
providing the downstream packets to the one or more routing gateways.

3. The method of claim 1 or 2, wherein each of the one or more routing gateways is one of a fixed network routing gateway or a fifth-generation routing gateway.

4. The method of claim 1, 2 or 3, wherein the access gateway function operates in one of an adaptive mode or a direct mode.

5. The method of any of claims 1 to 4, wherein the encapsulated upstream packets are destined for a core network.

6. The method of any of claims 1 to 5, wherein the layer 2 tunnel is one of a virtual extensible local area network tunnel, a network virtualization using generic routing encapsulation tunnel, or a layer 2 virtual private network tunnel.

7. The method of any of claims 1 to 6, wherein the identifier of the layer 2 tunnel includes one of a virtual extensible local area network identifier, a service provider network virtual local area network (VLAN) identifier, or a customer network VLAN identifier.

8. A device, comprising:
one or more memories; and
one or more processors to:
configure, in a device, a network address of a broadband network gateway;
receive upstream packets from one or more routing gateways;
encapsulate the upstream packets with an identifier of a layer 2 tunnel, based on the network address, and to generate encapsulated upstream packets; and
provide the encapsulated upstream packets to the broadband network gateway via the layer 2 tunnel and based on the network address and the identifier.

9. The device of claim 8, wherein the one or more processors are further to:
receive encapsulated downstream packets from the broadband network gateway;
decapsulate the encapsulated downstream packets to generate downstream packets; and
provide the downstream packets to the one or more routing gateways.

10. The device of claim 8 or 9, wherein each of the one or more routing gateways is a fixed network routing gateway and/or is associated with a multiple dwelling unit.

11. The device of any of claims 8 to 10, further configured to provide functionality corresponding to the steps of any of claims 5 to 7.

12. A computer-readable medium comprising a set of instructions, the set of instructions comprising one or more instructions that, when executed by one or more processors of a device, cause the device to:
provision the device with a rule identifying a first network device and a second network device;
receive encapsulated upstream packets associated with one or more routing gateways and encapsulated into a general packet radio service tunneling protocol (GTP);
decapsulate the GTP from the encapsulated upstream packets to generate upstream packets;
encapsulate the upstream packets with an identifier of a layer 2 tunnel and to generate encapsulated upstream packets; and
provide the encapsulated upstream packets to the first network device and the second network device via the layer 2 tunnel and based on the identifier.

13. The computer-readable medium of claim 12, wherein the one or more instructions further cause the device to:
receive, from the first network device or the second network device, encapsulated downstream packets via the layer 2 tunnel;
decapsulate the identifier of the layer 2 tunnel from the encapsulated downstream packets to generate downstream packets;
encapsulate the downstream packets into a general packet radio service tunneling protocol and to generate encapsulated downstream packets; and
provide the encapsulated downstream packets toward the one or more routing gateways.

14. The computer-readable medium of claim 12 or 13, wherein the first network device is an access gateway function and the second network device is a broadband network gateway.

15. The computer-readable medium of claim 12, 13 or 14, wherein the device is a user plane function.
